# EUROPÄISCHE PATENTSCHRIFT

(11) **EP 2 444 916 B1**
(45) Veröffentlichungstag und Bekanntmachung des Hinweises auf die Patenterteilung: **17.04.2013**
(21) Anmeldenummer: 11182315.9
(22) Anmeldetag: 22.09.2011
(51) Int. Cl.: G06K 7/10

(54) **RFID-Lesevorrichtung und Lese- und Zuordnungsverfahren**
RFID reading device and reading and allocation method
Dispositif de lecture RFID et procédé de lecture et d'attribution

(30) Priorität: 25.10.2010 DE 102010060148
(43) Veröffentlichungstag der Anmeldung: 25.04.2012
(73) Patentinhaber: Sick AG, 79183 Waldkirch (DE)
(72) Erfinder: Günther, Andreas, 22941 Bargteheide (DE)
(74) Vertreter: Ludewigt, Christoph

(56) Entgegenhaltungen:
- US-A1- 2007 023 520
- US-B1- 6 307 468

## Beschreibung

Die Erfindung betrifft eine Vorrichtung und ein Verfahren zum Lesen und Zuordnen eines RFID-Transponders nach dem Oberbegriff von Anspruch 1 bzw. 9.

Zur Automatisierung von logistischen Bewegungen ist die möglichst fehlerfreie Identifikation von Objekten und Waren erforderlich. Dies geschieht an Identifikationspunkten, vor allem bei einem Wechsel des Besitzers der Ware oder einem Wechsel des Transportmittels. Ein automatisierendes Identifikationssystem wird demnach beispielsweise bei einem Wareneingang eines Logistikzentrums installiert, um eingehende und ausgehende Waren zu verzeichnen. Dies führt zu schnellen und nachvollziehbaren Logistikbewegungen.

Weitere wichtige Anwendungen für die automatische Identifikation sind logistische Verteilerzentren, etwa von Paketversendern oder die Gepäckaufgabe in Flughäfen. Ein herkömmliches Verfahren der Identifikation ist die Barcodelesung. Dabei sind die geförderten Objekte, wie eine Palette, Paket oder Koffer mit einem einen Barcode tragenden Etikett versehen, dass mit Hilfe von stationären Barcodelesesystemen gelesen und einem Objekt zugeordnet wird, womit das Objekt identifiziert ist.

Seit einiger Zeit wird versucht, die optische Abtastung per Barcodeleser durch RFID-Leser (Radio Frequency Identification) zu ersetzen. Dabei ist an dem zu identifizierenden Objekt anstelle eines Barcodes ein Transponder angebracht. Solche Transponder können prinzipiell aktiv sein, also eine eigene Energieversorgung aufweisen und selbstständig elektromagnetische Strahlung erzeugen. In der Praxis eignen sich diese Transponder für die Logistik aber weniger, weil durch die Energieversorgung die Stückpreise solcher Transponder nicht das für den Massenmarkt erforderliche geringe Niveau erreichen können. Deshalb werden zumeist passive Transponder ohne eigene Energieversorgung eingesetzt. In beiden Fällen wird durch elektromagnetische Strahlung des Lesegerätes der Transponder zur Abstrahlung der gespeicherten Information angeregt, wobei passive Transponder die notwendige Energie aus der Sendeenergie des Lesesystems beziehen.

Neben dem Auslesen der Information, die der Transponder beziehungsweise das RFID-Tag trägt, verlangen Anwendungen oft auch die genaue örtliche Lokalisierung von mehreren auf kleinem Raum verteilten Transpondern. Beim etablierten Ultrahochfrequenzstandard ISO 18000-6 werden passive Transponder nach dem Backscatter-Verfahren ausgelesen. Der Erfassungsbereich für eine Antenne ist relativ groß. Durch die Antennencharakteristik mit einem Öffnungswinkel von ca. 60° und einer Erfassungsreichweite von zumindest einigen Metern kann innerhalb von mehreren Raummetern mit den dort positionierten RFID-Transpondern kommuniziert werden. Sofern also nicht garantiert ist, dass sich in diesem relativ großen Bereich nur ein einziges mit einem Transponder versehenes Objekt befindet, entstehen Mehrdeutigkeiten. Dabei ist Vereinzelung, also die Zuordnung einer RFID-Lesung zu einem bestimmten Transponder, zumindest im Standard ISO 18000-6 noch durch das Protokoll gelöst, indem jeweils nur ein bestimmter Transponder zum Senden aufgefordert wird. Damit bleibt aber offen, wo sich dieser Transponder befindet und insbesondere zu welchem Objekt er gehört.

Eine Begrenzung des Erfassungsbereichs durch spezielle Antennencharakteristiken oder der Erfassungsreichweite, beispielsweise über die Sendeleistung, löst das Lokalisierungsproblem nur bedingt.

Sofern sich die mit den Transpondern versehenen Objekte auf einem Förderband in einer Richtung bewegen, ist die Lokalisierung durch diese Randbedingung erleichtert. An derartigen Förderanlagen kann nämlich von einer über den sensierten Förderanlagenabschnitt bekannten linearen Translation ausgegangen werden und es ist unter diesen Voraussetzungen ausreichend, die Position der Transponder einmalig an einer ermittelbaren Stelle zu einem ermittelbaren Zeitpunkt zu bestimmen.

Bei herkömmlichem Vorgehen wird auch an Förderanlagen wegen des großen Erfassungsbereichs in Translationsrichtung nur eine Ortsauflösung von einigen Dezimetern bis Metern erreicht. Das ist in der heutigen Logistik bei weitem nicht ausreichend. Zahlreiche Fehlerquellen stören die Genauigkeit zusätzlich, etwa eine Variabilität durch die Orientierung des Transponders, Feldinhomogenitäten und vor allem Mehrfachstreuungen und Echos.

Aus der US 2002/0008656 A1 ist ein RFID-Leseverfahren bekannt, bei dem mittels mehrerer Empfangsantennen die Richtung, aus der die Transpondersignale kommen, ermittelt werden kann.

Aus der US 6,307,468 B1 ist ein RFID Leser bekannt, der ein sich drehendes Magnetfeld aussenden kann, damit ein Transponder unabhängig von seiner Orientierung im Raum mit dem Leser kommunizieren kann. Das drehende Magnetfeld wird durch zwei, senkrecht zueinander ausgerichtete Sendespulen erzeugt, denen beide dasselbe Signal aber mit einem Phasenversatz von 90° zugeführt wird. Da es sich somit um zwei othogonale Signale handelt, werden die entsprechenden Sendekanäle als "in-phase channel" und "quadratur channel" bezeichnet.

Die US 2007/0023520 A1 beschreibt ein RFID System, mit dem aus den Signalen eines Transponders Ort und Geschwindigkeit eines den Transponder tragenden Objektes berechnet werden können.

In dem Artikel "Localization and Tracking of Passive RFID Tags Based on Direction Estimation" von Yimin Zhang und anderen, veröffentlicht im International Journal of Antennas and Propagation der Hindawi Publishing Corporation, Vol. 2007, Article ID 17426, wird für die spezielle Situation von Objekten auf einem Förderband eine Lokalisierung anhand der Leserichtung vorgenommen (DOA, direction of arrival). Dazu wird das Signal des Transponders von zwei Antennen aufgenommen und die Phasendifferenz zwischen den beiden Signalen ausgewertet. Die DOA wird dann anhand einer Mehrfachmessung unter Voraussetzung der bekannten linearen Bewegung mit bekannter Geschwindigkeit in einem Least-Mean-Square-Fit geschätzt. Hierbei wird aber die Phasendifferenz im empfangenen Basisband ausgewertet. Eine solche Auswertung ist verhältnismäßig aufwändig und langsam.

Es ist daher Aufgabe der Erfindung, die Zuordnung der RFID-Information eines Transponders (RFID-Tags) zu dem zugehörigen Objekt zu verbessern.

Diese Aufgabe wird durch eine RFID-Lesevorrichtung und ein Verfahren zum Auslesen und Zuordnen eines RFID-Transponders gemäß Anspruch 1 bzw. Anspruch 9 gelöst.

Eine erfindungsgemäße RFID-Lesevorrichtung zum Lesen von RFID-Informationen eines RFID-Transponders ist stationär an einer Fördereinrichtung angeordnet. Die RFID-Information wird gelesen, indem bei einem Lesevorgang ein Transpondersignal erzeugt wird, wozu einem Trägersignal eine RFID-Information einer Frequenz in einem Basisband durch Backscattermodulation aufmoduliert wird. Eine Sendeeinheit sendet ein quadraturamplitudenmoduliertes Sendesignal, also mit Inphase-Komponente (I-Komponente) und Quadratur-Komponente (Q-Komponente), an den Transponder und eine Empfangseinheit empfängt das Transpondersignal des RFID-Transponders. Mit einer Auswertungseinheit wird die RFID-Informationen aus dem Transpondersignal ausgelesen. Erfindungsgemäß weist die Sendeeinheit zwei in Förderrichtung beabstandete Sendeantennen auf, wobei das Sendesignal der einen Sendeantenne die Inphase-Komponente und das Sendesignal der anderen Sendeantenne die Quadratur-Komponente des quadraturamplitudenmodulierten Sendesignal repräsentiert, so dass bei Aussenden der Inphase- und Quadratur-Komponenten sich diese in einer quer über die Fördereinrichtung erstreckenden Ebene additiv zu dem vollständigen quadraturamplitudenmodulierten Sendesignal überlagern.

Die Erfindung geht damit einen völlig neuartigen Weg, nämlich die I-Komponente und Q-Komponente des quadraturamplitudenmodulierten Sendesignals nicht zu dem eigentlichen Sendesignal zu addieren, sondern die Komponenten einzeln jeweils einer Sendeantenne zuzuführen und auszusenden. Dabei sind die Sendeantennen in Förderrichtung beabstandet, vorzugsweise mit einem Abstand von λ/2. Werden die beiden Komponenten nun ausgesendet, führt das zur Überlagerung der ausgesendeten Komponenten, die sich jedoch nur in bestimmten Bereichen derart überlagern, dass nur dort das vollständige quadraturamplitudenmodulierte Sendesignal vorliegt. Bei einem Abstand der Sendeantennen von λ/2 liegt das so entstandene quadraturamplitudenmodulierte Sendesignal in einer Mittenebene zwischen den beiden Sendeantennen. Somit kann nur ein Transponder, der in der Mittenebene liegt, das Sendesignal "verstehen" und somit seine RFID-Information mit dem Transpondersignal senden. Alle anderen Transponder, die sich auch im Wirkungsbereich der Sendeantennen befinden, "verstehen das Sendesignal nicht" und senden deshalb kein Transpondersignal.

Somit kann ein Transponder lokalisiert und zugeordnet werden, nämlich indem jetzt klar ist, dass nur ein Transponder in der Mittenebene sein Transpondersignal senden kann, so dass dieser sendende Transponder dann demjenigen Objekt zugeordnet wird, das gerade die Mittenebene durchläuft. Einzige Voraussetzung für die korrekte Zuordnung zum Objekt ist, dass keine zwei Transponder gleichzeitig in der Mittenebene angeordnet sein dürfen, was für die Objekte bedeutet, dass sie nicht nebeneinander gefördert werden. Das ist aber in Förderanlagen in der Logistik in der Regel gewährleistet.

Obwohl die Erfindung grundsätzlich auch in anderen Frequenzbereichen und mit anderen Standards einsetzbar ist, wird bevorzugt davon ausgegangen, dass der Ultrahochfrequenzstandard ISO 18000-6 / EPC Class 1 Gen 2 erfüllt ist. Innerhalb Europas liegt der genutzte Frequenzbereich bei 866 bis 868 MHz entsprechend einer Wellenlänge von ca. 34 cm. Selbstverständlich sind aber auch mehrere Kanäle und andere Trägerbänder von der Erfindung umfasst, etwa um Standards anderer Länder wie den USA zu erfüllen.

Bevorzugt sind die Sendeantennen in etwa im gleichen Querabstand zur Förderrichtung angeordnet, da dann die Mittenebene in etwa senkrecht zur Förderrichtung liegt, was eine einfache geometrische Anordnung bedeutet und damit eine einfache Zuordnung des Transponders zum Objekt. Auf diese Weise wird die Auswertung besonders einfach. Befindet sich das mit dem Transponder versehene Objekt zudem auf einem linearen Förderband, so ist durch die Mittenebene bis auf die in der Praxis meist vernachlässigbare Breite dieses Förderbands die Lokalisierung bereits vollständig. Auf die Breite des Förderbands und Höhe des Objekts kommt es zumeist schon deshalb nicht an, weil man die Objekte in den meisten Anwendungen anhand lediglich ihrer Translationsortskoordinate sortieren möchte.

In Weiterbildung der Erfindung weist der Transponder einen Hüllkurvendemodulator auf zur Demodulation einer Hüllkurve des Sendesignals.

Die Auswerteeinheit ist in Weiterbildung der Erfindung dafür ausgebildet, die gelesene RFID-Information jeweils einem einzelnen Objekt, das auf der Fördereinrichtung gefördert wird, zuzuordnen.

Damit es zu einer sauberen Überlagerung der I- und Q-Komponenten in gewünschter Weise in der Mittenebene kommt, sind in Weiterbildung der Erfindung die beiden Sendeantennen und die zugehörigen Kanäle in der Sendeeinheit identisch ausgebildet. Dadurch können störende elektronische Phasenverschiebungen vermieden werden. Falls dennoch störende Phasenverschiebungen auftreten, kann weiter vorgesehen sein, dass in mindestens einem Kanal ein Phasenverzögerungsglied angeordnet ist, mittels dessen die störenden elektronischen Phasenverschiebungen ausgeglichen oder eingestellt werden können.

Um eine Justierung der Mittenebene auf genau eine gewünschte Ausrichtung zu erreichen, kann in einer Ausführungsform ein Referenz-RFID-Transponder in der Mittenebene angebracht sein.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Darstellung der beispielhaften Anordnung einer erfindungsgemäßen RFID-Lesevorrichtung an einem Förderband, welches mit Transpondern versehene Objekte fördert; und
- Fig. 2: ein Blockdiagramm der Funktionseinheiten einer Ausführungsform der erfindungsgemäßen RFID-Lesevorrichtung.

Die Erfindung wird am Beispiel eines RFID-Systems nach dem UHF-Standard ISO 18000-6 beschrieben. Die Erfindung ist aber nicht hierauf beschränkt und insbesondere auch bei zukünftig erst entwickelten Standards einsetzbar.

Der genutzte Frequenzbereich für die Trägerfrequenz liegt bei 868 MHz. Die Kommunikation zwischen Leser und Transponder ist halbduplex, d. h. die Sendeantenne sendet ständig ein Signal zur Energieversorgung, aber Downlink und Uplink wechseln einander sequentiell ab. Der Uplink, also die Kommunikation von Transponder zu Leser, erfolgt durch Backscattermodulation des Transponders und dessen linear polarisierter Antenne, während der Leser ein CW-Signal mit bekannter Frequenz aussendet.

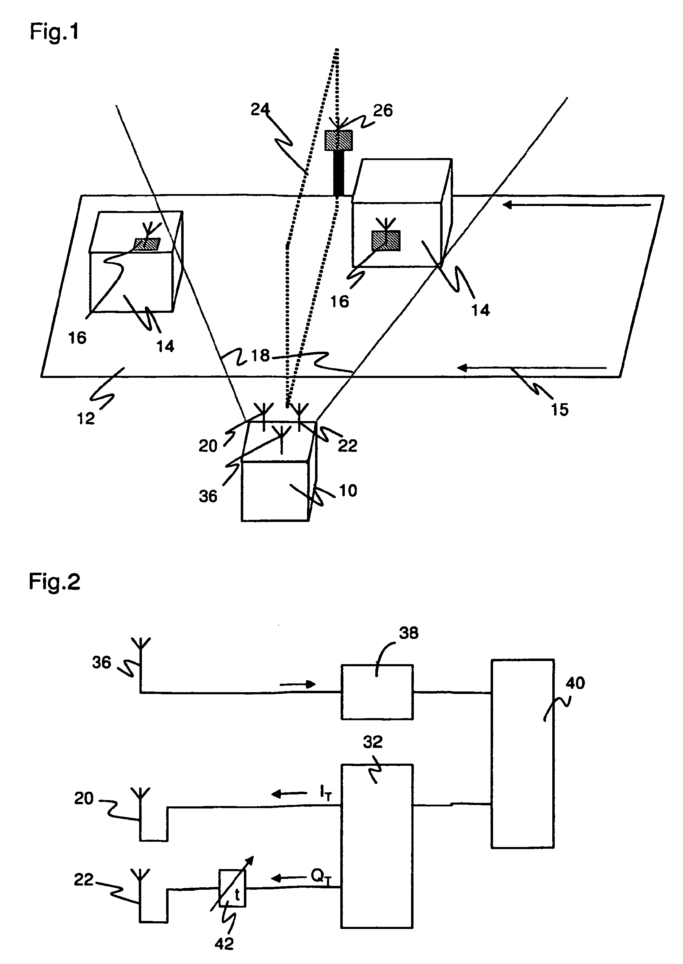

Bei der in Figur 1 dargestellten Konfiguration ist ein RFID-Leser 10 nach diesem oder einem anderen Standard an einem Förderband 12 montiert, welches Objekte 14 in einer durch Pfeile 15 angedeuteten Richtung fördert. Die Objekte 14 tragen RFID-Transponder 16, welche der RFID-Leser 10 auslesen kann, während sie Sich in seinem Lesefeld 18 befinden.

Der erfindungsgemäße RFID-Leser 10 weist zwei Sendeantennen 20 und 22 zum Senden eines quadraturamplitudenmodulierten Sendesignals, eine Empfangsantenne 36 und Empfangseinheit 38 zum Empfang eines Transpondersignals des RFID-Transponders 16 und eine Auswerteeinheit 40 auf.

Im Grunde ist die Arbeitsweise des erfindungsgemäßen RFID-Lesers 10 die eines herkömmlichen RFID-Lesers. Das quadraturamplitudenmodulierte Sendesignal wird an einen Transponder 16 gesandt, der dann ein Transpondersignal erzeugt, indem einem Trägersignal eine RFID-Informationen einer Frequenz in dem Basisband durch Backscattermodulation aufmoduliert wird. Das Transpondersignal wird von der Empfangsantenne 36 empfangen und der Empfangseinheit 38 zugeführt, die die entsprechenden empfangsseitigen Signale aus dem Transpondersignal generiert und der Auswerteeinheit 40 zuführt. In der Auswerteeinheit 40 wird aus diesen Signalen die RFID-Information ausgelesen.

Das erfindungsgemäße Neue ist, dass der RFID-Leser zwei Sendeantennen 20 und 22 aufweist, deren Abstand in Förderrichtung maximal λ/2 und bevorzugt genau λ/2 beträgt, wobei λ die Wellenlänge des Basisbandes ist, bei einer Trägerfrequenz von 868 MHz also λ/2 = 17 cm ist. Der Abstand der beiden Sendeantennen von der Fördereinrichtung 12 quer zur Förderrichtung ist gleich. Die Sendeantennen 20 und 22 sind mit einem Quadraturmodulator 32 verbunden, der mit der Auswerteeinheit 40 verbunden ist, die die dem Sendesignal aufzumodulierende Information an den Quadraturmodulator 32 gibt. Der Quadraturmodulator 32 erzeugt dementsprechend die Inphase-Komponente I_{T} des Sendesignals und die Quadratur-Komponente Q_{T} des Sendesignals. Nun werden aber diese beiden Komponenten nicht addiert, sondern jeweils einzelnen der Sendeantenne 20 bzw. 22 zugeführt, so dass die Sendeantenne 20 die I_{T}-Komponente und die Sendeantenne 22 die Q_{T}-Komponente aussenden.

Erst im Außenraum werden die I_{T}- und Q_{T}-Komponente in den Wirkbereichen der Sendeantennen 20 und 22 überlagert. Dabei kommt es nur in der Mittenebene 24 zu einer derartigen Überlagerung, dass dort das vollständige quadraturamplitudenmodulierte Sendesignal entsteht, denn die beiden Sendeantennen 20 und 22 haben genau eine halbe Wellenlänge Abstand zueinander. Denn nur in der Mittenebene haben die I_{T}- und Q_{T}-Komponente die richtige Phasenbeziehung zueinander um das quadraturamplitudenmodulierte vollständige Sendesignal zu bilden.

Da ein Transponder 16 nur dann das Sendesignal "verstehen" kann, wenn dieses vollständig ist und ansonsten keinerlei Verzerrungen oder Störungen aufweist, wird der Transponder 16 nur dann vom Sendesignal angesprochen, wenn er sich in der Mittenebene 24 befindet. Dabei ist es denkbar, dass die Mittenebene eine gewisse Ausdehnung haben kann, was heißen soll, dass beispielsweise bei höherer Sendeleistung ein Transponder 16 auch dann anspricht, wenn er nicht exakt in der Mitte liegt. Ein so angesprochener Transponder 16 kann dann sein eigenes Transpondersignal senden, so dass, wenn ein Transpondersignal vom RFID-Leser 10 empfangen wird, der RFID-Leser 10 "weiß", dass dieser Transponder sich in der Mittenebene 24 befindet und somit dem dort momentan befindlichen Objekt zuordnen kann. Da eine Lokalisierung in Förderrichtung 15 ausreichend ist, ist eine genaue Zuordnung von Transponder 16 zu Objekt 14 mit der Erfindung möglich.

Damit senderseitig die I- und Q-Komponenten mit korrekter Phase zueinander ausgesandt werden, sollten die beiden Sendekanäle identisch ausgebildet seien, um störende elektronische Phasenverschiebungen zu vermeiden. Falls dennoch störende Phasenverschiebungen auftreten, kann in einer Ausführungsform der Erfindung ein Phasenverzögerungsglied 42 in einem der zwei oder in beiden Kanälen angeordnet sein.

Auch könnte ein Referenztransponder 26 in der Mittenebene 24 an dem Förderband 12 montiert sein, wobei es denkbar wäre, die Mittenebene 24 mittels des Referenztransponders 26 auszurichten, indem z. B. das Phasenverzögerungsglied 42 so eingestellt wird, dass die Mittenebene 24 auf den Referenztransponder 26 trifft und dieser somit anspricht.

## Patentansprüche

1. RFID-Lesevorrichtung (10), die stationär an einer Fördereinrichtung (12) angeordnet ist, zum Lesen von RFID-Informationen eines RFID-Transponders (16), welcher bei einem Lesevorgang ein Transpondersignal erzeugt, indem einem Trägersignal eine RFID-Information einer Frequenz in einem Basisband durch Backscattermodulation aufmoduliert wird, mit einer Sendeeinheit zum Senden eines quadraturamplitudenmodulierten Sendesignals an den Transponder (16) und einer Empfangseinheit zum Empfangen des Transpondersignals des RFID-Transponders (16) und mit einer Auswertungseinheit (40), welche dafür ausgebildet ist, die RFID-Informationen aus dem Transpondersignal auszulesen, **dadurch gekennzeichnet, dass** die Sendeeinheit zwei in Förderrichtung beabstandete Sendeantennen (20, 22) aufweist, denen die Inphase-Komponente (I_{T}) und die Quadratur-Komponente (Q_{T}) des vollständigen quadraturamplitudenmodulierten Sendesignal jeweils einzeln zugeführt wird und die diese Komponenten jeweils einzeln aussenden, so dass das Sendesignal der einen Sendeantenne (20) die Inphase-Komponente (I_{T}) und das Sendesignal der anderen Sendeantenne (22) die Quadratur-Komponente (Q_{T}) des vollständigen quadraturamplitudenmodulierten Sendesignal repräsentiert, so dass bei Aussenden der Inphase- und Quadratur-Komponenten sich diese erst im Außenraum in einer quer über die Fördereinrichtung (12) erstreckenden Ebene (24) additiv zu dem vollständigen quadraturamplitudenmodulierten Sendesignal überlagern, und dass der Transponder (16) nur das vollständige Sendesignal verstehen kann.

2. RFID-Lesevorrichtung nach Anspruch 1, wobei der Abstand der Sendeantennen in Förderrichtung maximal λ/2 beträgt, wobei λ die Wellenlänge des Basisbandes ist.

3. RFID-Lesevorrichtung nach Anspruch 1 oder 2, wobei die Sendeantennen in etwa in gleichem Querabstand zur Förderrichtung angeordnet sind.

4. RFID-Lesevorrichtung nach einem der vorhergehenden Ansprüche, wobei der Transponder einen Hüllkurvendemodulator aufweist zur Demodulation einer Hüllkurve des Sendesignals.

5. RFID-Lesevorrichtung nach einem der vorhergehenden Ansprüche, wobei die Auswerteeinheit dafür ausgebildet ist, die gelesene RFID-Information jeweils einem einzelnen Objekt, das auf der Fördereinrichtung gefördert wird, zuzuordnen.

6. RFID-Lesevorrichtung nach einem der vorhergehenden Ansprüche, wobei die beiden Antennen und zugehörigen Kanäle in der Sendeeinheit identisch ausgebildet sind, um störende elektronische Phasenverschiebungen zu vermeiden und/oder wobei in mindestens einem Kanal ein Phasenverzögerungsglied vorgesehen ist, mittels dessen störende elektronische Phasenverschiebungen ausgeglichen oder eingestellt werden können.

7. RFID-Lesevorrichtung nach einem der vorhergehenden Ansprüche, wobei die Phasendifferenz elektronisch so eingestellt ist, dass gerade auf der Mittenebene zwischen beiden Sendeantennen die additive Überlagerung der I- und Q-Signale zum vollständigen quadraturamplitudenmodulierten Sendesignal erfolgt.

8. RFID-Lesevorrichtung nach einem der vorhergehenden Ansprüche, wobei ein Referenz-RFID-Transponder in der Mittenebene angebracht ist.

9. Verfahren zum Lesen und Zuordnen eines Transponders zu einem auf einer Fördereinrichtung geförderten Objekt, mit den Schritten:
- Lesen von RFID-Informationen des RFID-Transponders mit einer stationär an der Fördereinrichtung angeordneten RFID-Lesevorrichtung, indem bei dem Lesevorgang ein Transpondersignal erzeugt wird, indem einem Trägersignal eine RFID-Information einer Frequenz in einem Basisband durch Backscattermodulation aufmoduliert wird,
- Senden eines quadraturamplitudenmodulierten Sendesignals an den Transponder mit einer Sendeeinheit,
- Empfangen des Transpondersignals mit einer Empfangseinheit,
- Auslesen der RFID-Informationen aus dem Transpondersignal mit einer Auswertungseinheit,
**dadurch gekennzeichnet,**
- **dass** die Sendeeinheit das Sendesignal zum Transponder über zwei in Förderrichtung beabstandete Sendeantennen aussendet, denen die Inphase-Komponente (I_{T}) und die Quadratur-Komponente (Q_{T}) des vollständigen quadraturamplitudenmodulierten Sendesignal jeweils einzeln zugeführt wird und die diese Komponenten jeweils einzeln aussenden, so dass das Sendesignal der einen Sendeantenne die Inphase-Komponente und das Sendesignal der anderen Sendeantenne die Quadratur-Komponente des vollständigen quadraturamplitudenmodulierten Sendesignal repräsentiert und bei Aussenden der Inphase- und Quadratur-Komponenten sich diese erst im Außenraum in einer quer über die Fördereinrichtung erstreckenden Ebene additiv zu dem vollständigen quadraturamplitudenmodulierten Sendesignal überlagern, und dass der Transponder (16) nur dieses vollständige Sendesignal verstehen kann.

10. Verfahren nach Anspruche 9, wobei die relative Phasenlage von Inphase-Signal und Quadratursignal verändert werden kann, um systembedingte Phasenunterschiede auszugleichen oder einzustellen.

## Claims

1. RFID reading apparatus (10) which is arranged stationary on a conveyor (12), to read RFID information of an RFID transponder (16), which generates a transponder signal during a reading operation by frequency modulating a carrier signal in a baseband by Backscattermodulation in order to add a RFID information, with a transmission unit for transmitting a quadrature-amplitude-modulated transmission signal to the transponder (16) and a receiving unit for receiving the transponder signal from the RFID transponder (16) and with an evaluation unit (40) which is adapted to read out the RFID information from the transponder signal, **characterized in that** the transmitting unit has two transmission antennas (20, 22) spaced apart in the conveying direction, to which the in-phase component (I_{T}) and the quadrature component (Q_{T}) of the complete quadrature-amplitude-modulated transmission signal are fed separately, and said antenna transmit these components separately, respectively, so that the transmission signal of one of the transmitting antenna (20) represents the in-phase component (I_{T}) and the transmission signal of the other transmitting antenna (22) represents the quadrature component (Q_{T}) of the complete quadrature-amplitude-modulated transmission signal, so that in transmission of the in-phase and the quadrature components, these components overlap only in the outer space in a plane (24) extending transverse to the conveying direction (12) to the full quadrature-amplitude-modulated transmission signal, and **in that** the transponder (16) can only understand the full transmission signal.

2. RFID reading device according to claim 1, wherein the spacing of the transmitting antennas amount up to λ/2 in the conveying direction where λ is the wavelength of the base band.

3. RFID reading device according to claim 1 or 2, wherein said transmitting antennas are arranged approximately in the same lateral distance to the conveying direction.

4. RFID reading device according to one of the preceding claims, wherein the transponder comprises an envelope detector for demodulation of an envelope of the transmission signal.

5. RFID reading device according to one of the preceding claims, wherein the evaluation unit is adapted to assign the RFID information which has been read to a single object that is conveyed on the conveyor, respectively.

6. RFID reading device according to one of the preceding claims, wherein the two antennas and associated channels in the transmitter unit are of identical design in order to avoid perturbing electronic phase shifts and/or wherein at least in one channel, a phase delay element is provided by means of which interfering electronic phase shifts can be compensated or adjusted.

7. RFID reading device according to one of the preceding claims, wherein the phase difference is electronically adjusted so that the additive superposition of the I- and Q-signals to the full quadrature-amplitude-modulated transmission signal takes place precisely in the center plane between the two transmitting antennas.

8. RFID reading device according to one of the preceding claims, wherein a reference RFID transponder is mounted in the center plane.

9. A method of reading and associating a transponder to an object conveyed on a conveyor device, comprising the steps of:
- Reading of RFID information of the RFID transponder with a RFID reader stationary arranged at the conveyor, by generating a transponder signal during read operation, by frequency modulating a carrier signal in a baseband by Backscattermodulation in order to add a RFID information
- Sending a quadrature-amplitude-modulated transmission signal to the transponder with a transmission unit,
- Receiving the transponder signal at a receiving unit,
- Reading the RFID information from the transponder signal with an evaluation unit,
**characterized in that** the transmitting unit sends the transmission signal to the transponder via two transmission antennas spaced apart in the conveying direction , to which the in-phase component (I_{T}) and the quadrature component (Q_{T}) of the complete quadrature-amplitude-modulated transmission signal are fed separately, and said antenna transmit these components separately, respectively, so that the transmission signal of one of the transmitting antenna represents the in-phase component and the transmission signal of the other transmitting antenna represents the quadrature component of the complete quadrature-amplitude-modulated transmission signal, so that in transmission of the in-phase and the quadrature components, these components overlap only in the outer space in a plane extending transverse to the conveying direction to the full quadrature-amplitude-modulated transmission signal, and **in that** the transponder can only understand the full transmission signal.

10. Method according to claim 9, wherein the relative phasing of in-phase signal and quadrature signal can be changed to compensate or to adjust systematic phase differences.

## Revendications

1. Dispositif de lecture RFID (10), qui est agencé stationnaire sur un moyen de convoyage (12) afin de lire des informations RFID d'un transpondeur RFID (16), qui génère lors d'une opération de lecture un signal de transpondeur en ce qu'une information RFID avec une fréquence est modulée en superposition sur un signal porteur dans une bande de base par modulation en rétrodiffusion, comprenant une unité émettrice pour émettre un signal d'émission modulé en amplitude en quadrature vers le transpondeur (16) et une unité réceptrice pour recevoir le signal de transpondeur du transpondeur RFID (16), et comprenant une unité d'évaluation (40) qui est réalisée pour lire les informations RFID hors du signal de transpondeur,
**caractérisé en ce que** l'unité émettrice comprend deux antennes émettrices (20, 22) à distance en direction de convoyage, et la composante en phase (IT) et la composante en quadrature (QT) du signal d'émission complet modulé en amplitude en quadrature sont alimentées séparément aux antennes et transmises séparément par des antennes respectivement, de sorte que le signal d'émission d'une antenne émettrice (20) représente la composante en phase (IT) et que le signal d'émission de l'autre antenne émettrice (22) représente la composante en quadrature (QT) du signal d'émission complet modulé en amplitude en quadrature, de sorte que lors de l'émission des composantes en phase et en quadrature, celles-ci se superposent tout d'abord dans l'espace extérieur, dans un plan (24) qui s'étend transversalement au-dessus du moyen de convoyage (12), de manière additive au signal d'émission complet modulé en amplitude en quadrature, et **en ce que** le transpondeur (16) ne peut comprendre que le signal d'émission complet.

2. Dispositif de lecture RFID selon la revendication 1, dans lequel la distance des antennes d'émission en direction de convoyage s'élève au maximum à λ/2, où λ est la longueur d'onde de la bande de base.

3. Dispositif de lecture RFID selon la revendication 1 ou 2, dans lequel les antennes émettrices sont agencées approximativement à la même distance transversale par rapport à la direction de convoyage.

4. Dispositif de lecture RFID selon l'une des revendications précédentes, dans lequel le transpondeur comprend un démodulateur de courbe enveloppe pour la démodulation d'une courbe enveloppe du signal d'émission.

5. Dispositif de lecture RFID selon l'une des revendications précédentes, dans lequel l'unité d'évaluation est réalisée pour attribuer l'information RFID lue respectivement à un objet unique qui est convoyé sur le moyen de convoyage.

6. Dispositif de lecture RFID selon l'une des revendications précédentes, dans lequel les deux antennes et les canaux associés sont réalisés de manière identique dans l'unité émettrice, afin d'éviter des décalages de phase électroniques perturbateurs et/ou dans lequel dans au moins un canal il est prévu un circuit de retard de phase au moyen duquel des décalages de phase électroniques perturbateurs peuvent être compensés ou annulés.

7. Dispositif de lecture RFID selon l'une des revendications précédentes, dans lequel la différence de phase est réglée par voie électronique de telle façon que la superposition additive des signaux en phase et en quadrature pour donner le signal d'émission complet modulé en amplitude en quadrature se produit exactement sur le plan médian entre les deux antennes émettrices.

8. Dispositif de lecture RFID selon l'une des revendications précédentes, dans lequel un transpondeur RFID de référence est agencé dans le plan médian.

9. Procédé pour lire et attribuer un transpondeur à un objet convoyé sur un moyen de convoyage, comprenant les étapes suivantes :
- lecture d'informations RFID du transpondeur RFID avec un dispositif de lecture RFID agencé stationnaire sur le moyen de convoyage, en ce que l'on génère lors de l'opération de lecture un signal de transpondeur en modulant une information RFID avec une fréquence dans une bande de base en superposition sur un signal porteur, par modulation en rétrodiffusion,
- émission d'un signal d'émission modulé en amplitude en quadrature vers le transpondeur avec une unité émettrice,
- réception du signal de transpondeur avec une unité réceptrice,
- lecture des informations RFID hors du signal de transpondeur avec une unité d'évaluation,
**caractérisé en ce que**
- l'unité émettrice émet le signal d'émission vers le transpondeur via deux antennes d'émission écartées en direction de convoyage, et la composante en phase (IT) et la composante en quadrature (QT) du signal d'émission complet modulé en amplitude en quadrature sont alimentées séparément aux antennes et transmises séparément par des antennes respectivement, de sorte que le signal émis d'une antenne émettrice représente la composante en phase et que le signal émis de l'autre antenne émettrice représente la composante en quadrature du signal d'émission complet modulé en amplitude en quadrature et, lors de l'émission des composantes en phase et en quadrature, celles-ci se superposent dans un plan qui s'étend transversalement au-dessus de la direction de convoyage de manière additive pour donner le signal d'émission complet modulé en amplitude en quadrature uniquement dans l'espace extérieur, et **en ce que** le transpondeur (16) ne peut comprendre que ce signal d'émission complet.

10. Procédé selon la revendication 9, dans lequel la situation en phase relative du signal en phase et du signal en quadrature peut être modifiée afin de compenser ou d'annuler des différences de phase dues au système.
